# EUROPEAN PATENT APPLICATION

(11) **EP 4 557 451 A1**
(43) Date of publication of application: **21.05.2025**
(21) Application number: 24818776.7
(22) Date of filing: 07.06.2024
(51) Int. Cl.: H01M 10/48, H01M 50/569

(54) **BATTERY CAPABLE OF MONITORING ELECTROLYTE, AND BATTERY PACK**

(30) Priority: 07.06.2023 CN 202321451998 U; 24.10.2023 CN 202322865231 U
(71) Applicant: Eve Power Co., Ltd., Jingmen, Hubei 448000 (CN)
(72) Inventor: ZHANG, Minhui, Jingmen, Hubei 448000 (CN); WANG, Han, Jingmen, Hubei 448000 (CN); WANG, Jiao, Jingmen, Hubei 448000 (CN); YUAN, Dingding, Jingmen, Hubei 448000 (CN); WANG, Hua, Jingmen, Hubei 448000 (CN); SONG, Chengmao, Jingmen, Hubei 448000 (CN); CHEN, Xianyang, Jingmen, Hubei 448000 (CN); SUN, Fei, Jingmen, Hubei 448000 (CN); YANG, Yabin, Jingmen, Hubei 448000 (CN); HE, Wei, Jingmen, Hubei 448000 (CN); LIU, Jincheng, Jingmen, Hubei 448000 (CN)
(74) Representative: Berggren Oy
(86) International application number: PCT/CN2024/098031
(87) International publication number: WO 2024/251248

(57) **Abstract**

The present application relates to a battery capable of monitoring an electrolyte, and a battery pack. The battery capable of monitoring the electrolyte includes a housing, a cover plate and an acquisition module. The acquisition module includes a processing chip and an acquisition sensor electrically connected to the processing chip. The acquisition sensor is configured to acquire state data of the electrolyte in the battery capable of monitoring the electrolyte. The processing chip is disposed in the cover plate. The acquisition sensor is disposed in an accommodating cavity. A first end of the acquisition sensor is disposed in the electrolyte in the accommodating cavity. A distance between the first end of the acquisition sensor and a bottom plate of the housing is less than or equal to a first threshold.

## Description

This application claims priority to Chinese patent applications filed with the Chinese Patent Office on June 7, 2023 under application number 202321451998.8 and filed with the Chinese Patent Office on October 24, 2023 under application number 202322865231.6, the entire contents of which are incorporated herein by reference.

### TECHNICAL FIELD

The present application relates to the field of battery technologies, and especially relates to a battery capable of monitoring an electrolyte, and a battery pack.

### BACKGROUND

During a cyclic process of charging and discharging of a battery, an electrolyte decomposes to produce gases due to factors such as reactions of battery materials, high temperature and high voltage. As a result, an amount of the electrolyte inside the battery decreases, an air pressure inside the battery increases, and a PH value of the electrolyte also changes, thereby causing serious impacts on safety and electrical performance of the battery.

### SUMMARY

In a related art, a battery is usually detected in an environment of laboratory. An electrolyte or gases inside the battery are discharged, and then components of the electrolyte or the gases are detected. Therefore, it is difficult to obtain states of the electrolyte inside the battery during charging and discharging of the battery in real time, resulting in potential safety problems in the battery.

Therefore, there is an urgent need to design a battery capable of monitoring an electrolyte, and a battery pack to solve the technical problems.

In a first aspect, a battery capable of monitoring an electrolyte is provided by the present application. The battery includes a housing, a cover plate and an acquisition module. The acquisition module includes a processing chip and an acquisition sensor electrically connected to the processing chip. The processing chip is disposed in the cover plate. The acquisition sensor is configured to acquire state data of the electrolyte in the battery capable of monitoring the electrolyte. The acquisition sensor is disposed in an accommodating cavity. A first end of the acquisition sensor is disposed in the electrolyte in the accommodating cavity. A distance between the first end of the acquisition sensor and a bottom plate of the housing is less than or equal to a first threshold.

In a second aspect, a battery pack is further provided by the present application. The battery system includes a battery capable of monitoring the electrolyte and an analysis component. The analysis component has a receiving terminal wirelessly and/or wiredly connected to the battery. The analysis component is configured to receive and analyze signals from the processing chip of the battery capable of monitoring the electrolyte.

### BENEFICIAL EFFECT

In the battery capable of monitoring the electrolyte provided by the present application, the processing chip and the acquisition sensor are integrally disposed inside the battery capable of monitoring the electrolyte, and the data acquired by the acquisition sensor is transmitted to the processing chip, so as to obtain states of the electrolyte inside the battery during charging and discharging of the battery capable of monitoring the electrolyte in real time, thereby ensuring electrical performance and safety performance of the battery capable of monitoring the electrolyte.

In the battery pack provided by the present application, the battery capable of monitoring the electrolyte can be in a relatively safe and stable state during operation by providing the battery capable of monitoring the electrolyte and the analysis component. As such, it is beneficial to prolonging service life of the device.

### BRIEF DESCRIPTION OF THE DRAWINGS

FIG. 1 is a front view of a battery capable of monitoring an electrolyte provided by an embodiment.
FIG. 2 is an enlarged view of a region M in FIG. 1 provided by the embodiment.
FIG. 3 is a view of connection between a processing chip and transmission lines provided by an embodiment.
FIG. 4 is a first structural view of a lower plastic in a battery capable of monitoring the electrolyte provided by an embodiment.
FIG. 5 is a second structural view of a lower plastic in a battery capable of monitoring the electrolyte provided by an embodiment.
FIG. 6 is a top view of an upper plastic in a battery capable of monitoring the electrolyte provided by an embodiment.
FIG. 7 is a schematic three-dimensional cross-sectional view of a battery capable of monitoring the electrolyte provided by an embodiment.
FIG. 8 is a schematic front cross-sectional view of a battery capable of monitoring electrolyte provided by the embodiment.
FIG. 9 is a schematic side cross-sectional view of a battery capable of monitoring electrolyte provided by the embodiment.

### Description of Reference Numbers:

100, battery capable of monitoring an electrolyte; 10, cover plate; 110, upper plastic; 111, pole; 112, pressing ring; 113, liquid injection hole; 114, explosion-proof valve; 120, lower plastic; 121, exhausting groove; 121a, air releasing groove; 121b, placement groove; 122, first baffle; 122a, groove; 123, second baffle; 124, exhausting hole; 130, connector; 140, protective adhesive;
20, acquisition module; 210, processing chip; 220, acquisition sensor; 221, liquid level sensor; 221a, main body portion; 221b, hollow groove; 222, pH sensor; 231, first transmission line; 232, second transmission line; 233, third transmission line; 234, fourth transmission line;
30, core package;
40, housing; 41, accommodating cavity;
X, length direction of the battery capable of monitoring the electrolyte; Y, width direction of the battery capable of monitoring the electrolyte; Z, thickness of the battery capable of monitoring the electrolyte.

### DETAILED DESCRIPTION OF THE EMBODIMENT

In a related art, a battery is usually detected in an environment of laboratory. An electrolyte or gases inside the battery are discharged, and then components of the electrolyte or the gases are detected. Therefore, it is difficult to obtain states of the electrolyte inside the battery during charging and discharging of the battery in real time, resulting in potential safety problems in the battery. Based on the technical problem, a battery capable of monitoring an electrolyte and a battery pack are proposed below to solve the technical problem.

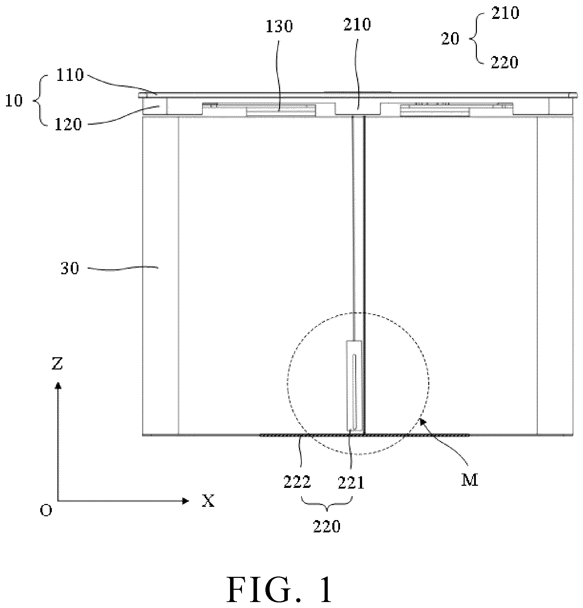

Referring to FIGs. 1 to 6, an embodiment of the present application provides a battery 100 capable of monitoring an electrolyte. The battery includes a housing 40, a cover plate 10, and an acquisition module 20.

In this embodiment, the housing 40 may be provided with an accommodating cavity 41. The accommodating cavity 41 includes an opening at one end. The cover plate 10 may cover the opening.

In this embodiment, the acquisition module 20 includes a processing chip 210 and an acquisition sensor 220 electrically connected to the processing chip 210. The acquisition sensor 220 is configured to acquire state data of the electrolyte in the battery 100 capable of monitoring the electrolyte.

In this embodiment, the processing chip 210 is disposed in the cover plate 10. The acquisition sensor 220 is disposed in the accommodating cavity 41. A first end of the acquisition sensor 220 is disposed in the electrolyte in the accommodating cavity 41. A distance between the first end of the acquisition sensor 220 and a bottom plate of the housing 40 is less than or equal to a first threshold.

It should be noted that since an amount of the electrolyte is different in different types of batteries, the first threshold of the present application can be set according to types of the batteries, so as to avoid setting a distance too large or too small, which makes data collected by the acquisition sensor 220 inaccurate, thereby resulting in technical problems of abnormal monitoring.

It should be noted that a core package 30 may be provided in the accommodating cavity 41. The core package 30 may be electrically connected to the pole 111 on the cover plate 10 through a connecting member 130.

It should be noted that a coordinate system is set based on length, width, and thickness directions of the battery capable of monitoring the electrolyte in the present application. For example, in structures of FIGs. 1 to 6, the length direction of the battery capable of monitoring the electrolyte is direction X, the width direction of the battery capable of monitoring the electrolyte is direction Y, and a thickness direction of the battery capable of monitoring the electrolyte is direction Z.

The present application provides the battery 100 capable of monitoring the electrolyte and the battery pack. The battery 100 capable of monitoring the electrolyte includes the housing 40, the cover plate 10 and the acquisition module 20. The acquisition sensor 220 is configured to acquire state data of the electrolyte in the battery 100 capable of monitoring the electrolyte. The acquisition module 20 includes the processing chip 210 and the acquisition sensor 220 electrically connected with the processing chip 210. The processing chip 210 is disposed in the cover plate 10. The acquisition sensor 220 is disposed in the accommodating cavity 41. The first end of the acquisition sensor 220 is disposed in the electrolyte in the accommodating cavity 41. The distance between the first end of the acquisition sensor 220 and the bottom plate of the housing 40 is less than or equal to the first threshold. In the present application, the processing chip 210 and the acquisition sensor 220 are integrally disposed inside the battery 100 capable of monitoring the electrolyte, and the data acquired by the acquisition sensor 220 is transmitted to the processing chip 210, so as to obtain states of the electrolyte inside the battery 100 during charging and discharging of the battery capable of monitoring the electrolyte in real time, thereby ensuring electrical performance and safety performance of the battery 100 capable of monitoring the electrolyte.

Hereinafter, technical solutions of the present application will be described according to specific embodiments.

It should be noted that the state data of the electrolyte in the present application may be liquid level data, pH data, temperature data, or other parameter data of the electrolyte. In the embodiments mentioned below, technical solutions of the present application will be described by monitoring the liquid level data and the pH data of the electrolyte.

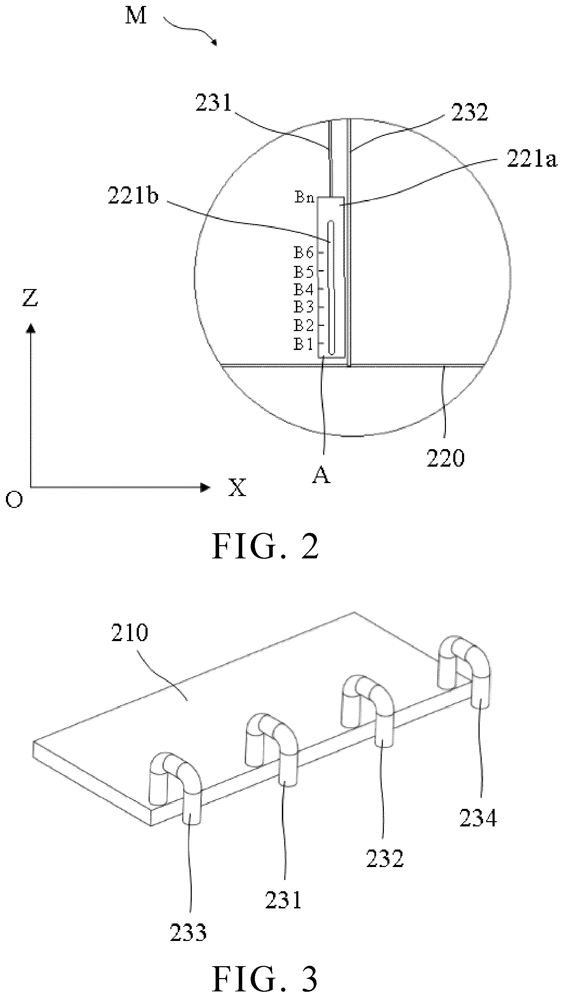

Referring to FIGs. 1 and 2, the acquisition sensor 220 may include a liquid level sensor 221 configured to acquire liquid level data of the electrolyte. The liquid level sensor 221 is electrically connected to the processing chip 210 through a first transmission line 231. The first transmission line 231 is configured to transmit the liquid level data of the electrolyte collected by the liquid level sensor 221 to the processing chip 210.

In this embodiment, referring to FIG. 2, the liquid level sensor 221 may include a main body portion 221a. A hollow groove 221b is provided in the main body portion 221a. The hollow groove 221b is configured to accommodate the electrolyte. A height of a liquid level of the electrolyte in the hollow groove 221b is equal to a height of a liquid level of the electrolyte in the accommodating cavity 41.

In this embodiment, the hollow groove 221b may extend along the thickness direction Z of the battery 100 capable of monitoring the electrolyte. The liquid level sensor 221 is further provided with a connecting channel (not shown) on a side adjacent to the bottom plate. The hollow groove 221b communicates with the electrolyte by the connecting channel. That is, in this embodiment, the connecting channel may be provided on the bottom side of the main body portion 221a, so that the liquid level sensor 221 may communicate with the outside. The electrolyte may enter the hollow groove 221b by the connecting channel, so that the height of the liquid level of the electrolyte in the hollow groove 221b is equal to the height of the liquid level of the electrolyte outside of the hollow groove 221b.

In the structures of FIGs. 1 and 2, both the bottom and the top of the liquid level sensor 221 may be located in the electrolyte. That is, the electrolyte may completely immerse the liquid level sensor 221. The distance between the bottom of the liquid level sensor 221 and the bottom plate of the housing 40 may be greater than 0, and the specific distance is not limited.

In the structures of FIGs. 1 and 2, the liquid level sensor 221 includes a bottom sensing part A and a side sensing part B. The side sensing part B is provided with a plurality of sensing scales, such as B1 to Bn. Since the electrolyte in the battery 100 capable of monitoring the electrolyte is conductive, the bottom sensing part A and the electrolyte inside the hollow groove 221b form a circuit. A sensing scale corresponding to the electrolyte is obtained according to a current flowing through the circuit to obtain the height of the liquid level of the electrolyte. The height of the liquid level of the electrolyte in the hollow groove 221b may be negatively correlated with the measured current. For example, in a case that a height of the electrolyte is higher than Bn, since the liquid level of the electrolyte in the hollow groove 221b does not change, a current obtained by the liquid level sensor 221 is a constant value. In a case that a height of the electrolyte ranges from B1 to Bn, since the liquid level of the electrolyte in the hollow groove 221b decreases, a total length of the conductor decreases, so that a current acquired by the liquid level sensor 221 may increase.

In the present application, the liquid level sensor 221 is provided in the electrolyte of the battery 100 capable of monitoring the electrolyte. The current flowing through the liquid level sensor 221 is obtained according to the height of the conductor formed by the electrolyte in the liquid level sensor 221, and the height of the electrolyte in the battery 100 capable of monitoring the electrolyte is obtained in real time according to the correlation between the current and the height of liquid level, so as to avoid abnormalities in electrical performance and safety performance of the battery 100 capable of monitoring the electrolyte due to too small capacity of the electrolyte.

Referring to FIGs. 1 and 2, the acquisition sensor 220 may further include a pH sensor 222 configured to acquire pH data of the electrolyte. The pH sensor 222 is electrically connected to the processing chip 210 through a second transmission line 232. The second transmission line 232 is configured to transmit the pH data of the electrolyte collected by the pH data sensor to the processing chip 210.

Referring to FIGs. 1 and 2, the pH sensor 222 is disposed at the bottom of the housing 40. The pH sensor may include a supporting part (not shown) and a sensing part (not shown). The supporting part is disposed outside a bare cell in the battery 100 capable of monitoring the electrolyte. The sensing part is disposed inside the bare cell. The electrolyte completely immerses the sensing part. The supporting part is configured to carry the bare core, so that the bare core and the bottom plate of the housing 40 are separated, and risk of damaged wrinkles caused by contact between the bare core and the bottom plate is decreased.

In this embodiment, in a case that hydroxide ions around the sensing part changes, the pH value may change simultaneously. For example, in a case that the hydroxide ions are consumed around the sensing part, hydrogen ions in the solution around the sensing part increases, that is, the pH value in the solution around the sensing part decrease. In a case that hydroxide ions are generated by reactions around the sensing part, hydrogen ions in the solution around the sensing part decreases, and the pH value of the solution around the sensing part increases. Therefore, the pH value around the sensing part is not affected by movement of the hydroxide ions to a negative electrode in the battery. The present application may monitor working states inside the battery through changes of the pH value.

In this embodiment, the sensing part may include a sensing electrode (not shown), a reference electrode (not shown), and a galvanometer (not shown). The reference electrode may be configured to be input with a constant first potential. The sensing electrode may be configured to sense a second potential of hydrogen ions in the electrolyte. The galvanometer may be configured to acquire a potential difference value between the first potential and the second potential.

In this embodiment, the sensing electrode may be a glass electrode. The sensing electrode is configured to sense a content of the hydrogen ions in the electrolyte, and is further configured to sense a potential difference in the electrolyte according to changes in the content of hydrogen ions in the electrolyte. The reference electrode may be a silver-silver oxide electrode. The reference electrode possesses a constant potential for comparison of the sensing electrode. In a case that the reference electrode and the sensing electrode are placed in the electrolyte, the sensing electrode and the reference electrode are electrically connected to each other to constitute a working battery. The galvanometer may acquire a lower potential difference between the sensing electrode and the reference electrode, and the potential of the battery may be an algebraic sum of the potential of the reference electrode and the potential of the sensing electrode.

In this embodiment, measurement of the pH value is based on the potential difference measured in the electrolyte by the working battery composed of the sensing electrode and the reference electrode, and based on linear relationship between the pH value of the electrolyte and the potential of the working battery, so as to realize on-line monitoring of the pH value in the electrolyte.

In the present application, the sensing part is provided in the electrolyte of the battery 100 capable of monitoring the electrolyte. On-line monitoring of the pH value in the electrolyte is realized based on the potential difference measured in the electrolyte by the working battery composed of the sensing electrode and the reference electrode, and based on linear relationship between the pH value of the electrolyte and the potential of the working battery, so as to monitor working states of the battery 100 capable of monitoring the electrolyte in real time, thereby avoiding abnormalities in electrical performance and safety performance of the battery 100 capable of monitoring the electrolyte.

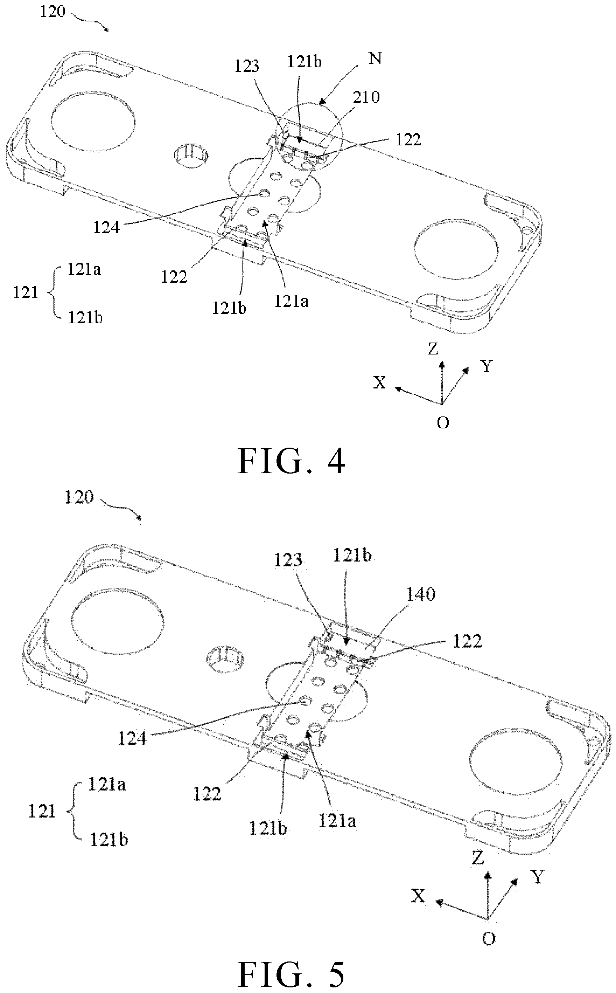

Referring to FIGs. 4 to 6, the cover plate 10 may include an upper plastic 110 and a lower plastic 120 disposed between the upper plastic 110 and the housing 40. An exhausting groove 121 is provided in the lower plastic 120.

In this embodiment, referring to FIGs. 4 and 5, two first baffles 122 are arranged in the exhausting groove 121, and the two first baffles 122 divide the exhausting groove 121 into an air releasing groove 121a and placement grooves 121b disposed on both sides of the air releasing groove 121a. A plurality of exhausting holes 124 are provided at the bottom of the air releasing groove 121a, and at least one of the placement grooves 121b is provided with the processing chip 210.

Referring to FIGs. 4 and 5, the processing chip 210 is fixed in the placement groove 121b in the lower plastic 120. A four transmission line is disposed on the processing chip 210. The four transmission line crosses the first baffle 122, and extends towards the battery 100 capable of monitoring the electrolyte by penetrating through the lower plastic 120.

In this embodiment, four transmission lines in the structures of FIGs. 3 to 5 include a third transmission line 233, the first transmission line 231, the second transmission line 232, and the fourth transmission line 234 that are arranged in parallel. The third transmission line 233 is configured to transmit the liquid level data from the first transmission line 231. The fourth transmission line 234 is configured to transmit the pH data from the second transmission line 232.

In this embodiment, the first transmission line 231 and the second transmission line 232 extend into the battery 100 capable of monitoring the electrolyte and are in contact with the electrolyte in the battery 100 capable of monitoring the electrolyte. The third transmission line 233 and the fourth transmission line 234 may be electrically connected to a terminal device, so as to transmit corresponding ones of the liquid level data and the pH data to the terminal device, such as a display device in an electric vehicle, thereby obtaining state data of the battery 100 capable of monitoring the electrolyte in the display device in real time.

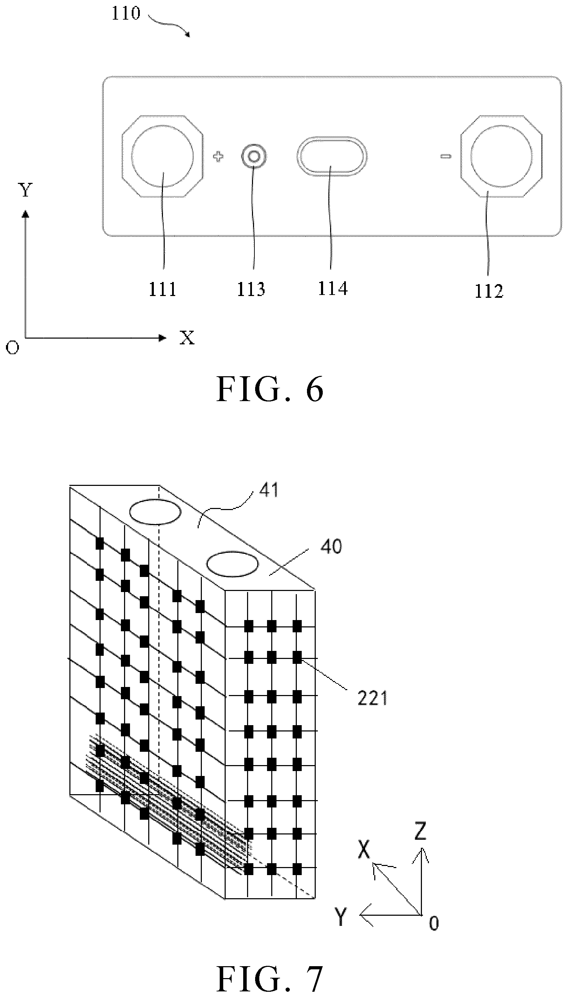

In this embodiment, referring to FIG. 6, the cover plate 10 may further include poles 111 disposed on both sides of the exhausting groove 121 and a pressing ring 112 abutting against the poles 111. The core package 30 may be electrically connected to a corresponding one of the poles 111 through the connector 130.

In this embodiment, a shape of the exhausting holes 124 may be circular, and ten exhausting holes 124 are shown in FIGs. 4 and 5. The plurality of exhausting holes 124 are correspond to the explosion-proof valve 114 on the cover plate 10.

In this embodiment, a thickness of the first baffle plate 122 may be less than or equal to a depth of the exhausting groove 121. The thickness of the first baffle plate 122 in FIGs. 4 and 5 is less than the depth of the exhausting groove 121, and the first baffle plate 122 is further provided with four grooves 122a. Four transmission lines cross the first baffle plate 122 through the four grooves 122a, so that the four transmission lines penetrate the lower plastic 120.

In this embodiment, the groove 122a may have an arced shape.

In this embodiment, the upper plastic 110 is also provided with a liquid injection hole 113.

In this embodiment, materials of the upper plastic 110 and the lower plastic 120 may be plastic materials such as PC, PP, and PVC.

In this embodiment, the processing chip 210 may be bonded to the bottom surface of the lower plastic 120. However, there is still a risk that the processing chip 210 may be peeled off from the surface of the lower plastic 120.

Referring to FIG. 5, at least two second baffles 123 are further provided in the placement groove 121b. The second baffles 123 are disposed on the side wall of the placement grooves 121b. The processing chip 210 is disposed on the bottom surfaces of the placement groove 121b. The second baffles 123 are disposed apart from the processing chip 210, and the second baffles 123 have an overlapping portions with the processing chip 210. At the same time, the placement grooves 121b are further filled with a protective adhesive 140. The protective adhesive 140 covers the processing chip 210. The second baffles 123 abut against the protective adhesive 140.

In this embodiment, in order to facilitate installation of the processing chip 210, an area of the bottom surface of the placement groove 121b may be larger than an area of the processing chip 210, Therefore, in a case that the processing chip 210 is installed in the placement groove 121b, there is still a circle of blank areas around the processing chip 210. Therefore, in this embodiment, in order to further fix and protect the processing chip 210, the processing chip 210 is further fixed by providing a circle of the protective adhesive 140 around periphery of the processing chip 210 to further fix the processing chip 210.

Secondly, since the processing chip 210 is disposed adjacent to the exhausting hole 124, and in a case that the explosion-proof valve of the battery 100 capable of monitoring the electrolyte is turned on, overflowed gas stream may carry out conductive substances in the battery 100 capable of monitoring the electrolyte, and the conductive substances may be sputtered onto the processing chip 210 through the exhausting hole 124. Therefore, the protective adhesive 140 also needs to cover the processing chip 210, so as to avoid devices on the processing chip 210 from failing due to the overflowed conductive substances.

In this embodiment, five second baffles 123 that are oppositely disposed may be provided in the placement groove 121b in FIG. 1. The second baffles 123 extend from the side wall of the placement groove 121b to the center of the placement groove 121b, so that the second baffles 123 have an overlapping portions with the processing chip 210.

In this embodiment, referring to FIG. 5, the second baffles 123 may be disposed apart from the processing chip 210. That is, there may be distances between the second baffles 123 and the processing chip 210 in the thickness direction Z of the battery 100 capable of monitoring electrolyte. The protective adhesive 140 fills the distances between the second baffles 123 and the processing chip 210, so that the second baffles 123 abut against the protective adhesive 140. The second baffles 123 further blocks the protective adhesive 140, thereby improving fixing performance of the protective adhesive 140 to the processing chip 210.

In this embodiment, the protective adhesive 140 may cover the processing chip 210 and the second baffle 123 at the same time. That is, in this embodiment, thickness of the protective adhesive 140 may be increased to cover the processing chip 210 and the second baffle 123 entirely.

The present application further provides a battery pack. The battery pack may include an acquisition integrated component, a plurality of batteries 100 capable of monitoring an electrolyte, a module housing, an upper protective part, and a bottom protective part. The module housing, the upper protective part, and the bottom protective part are surrounded to form an accommodating cavity 41, and the plurality of batteries 100 capable of monitoring the electrolyte and the acquisition integrated component are arranged in the accommodating cavity 41.

In this embodiment, the upper protective part is configured to protect the upper part of the battery pack. The upper protective part may be connected to the acquisition integrated component through plastic rivets and an adhesive layer on a barrier strip. A material of the upper protective part may be a plastic material such as PC, PP, PVC, and etc.

In this embodiment, the bottom protective part may be an insulating bottom film for protecting the bottom of the battery pack. The bottom protective part may be bonded to the bottom surface of the battery 100 capable of monitoring the electrolyte by using a double-sided adhesive tape. A material of the bottom protective part may be a film material such as PET or PVC.

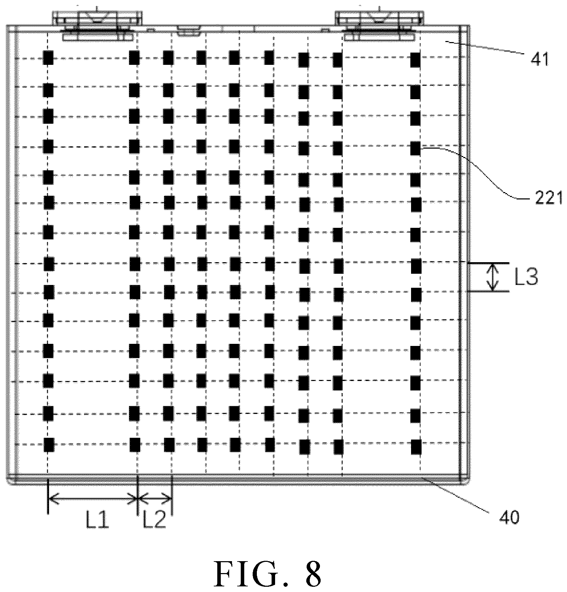

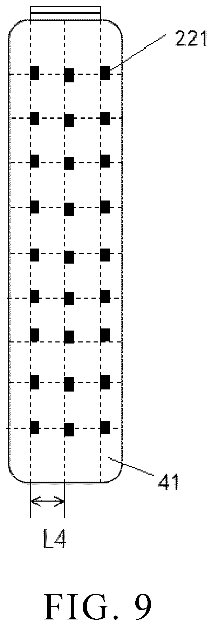

As shown in FIGs. 7 to 9, in this embodiment, the acquisition sensor 220 includes a plurality of liquid level sensors 221. The plurality of liquid level sensors 221 are arranged in an array on the inner side wall of the housing 40, Two adjacent ones of the liquid level sensors 221 are communicated to each other by optical fibers. The liquid level sensors 221 are configured to monitor a liquid level data of the electrolyte.

Distances between adjacent ones of the liquid level sensors 221 disposed at intervals along the length direction of the battery capable of monitoring the electrolyte includes L1 and L2, and L1 > L2. The plurality of liquid level sensors 221 are arranged in an array on the inner side wall of the housing 40, and distribution of the electrolyte inside the battery can be detected in real time by the liquid level sensors 221. As such, it is convenient for the user to easily understand states of the electrolyte inside the battery, so that the battery housing 40 does not need to be destroyed. As such, not only cost of monitoring of the device is reduced, but also monitoring accuracy of the electrolyte is improved.

In the embodiment of the present application, the liquid level sensors 221 have advantages of anti-electromagnetic interference, electrical insulation, corrosion resistance and high temperature resistance, light weight, and sensitivity. Further, the liquid level sensors 221 are low in price, and are sensitive to physical quantities such as stress and strain, and temperature. As such, it may not only realize monitoring of the electrolyte in real time, but also does not affect normal operation of the battery, thereby being beneficial to meet needs of the user for monitoring of the battery.

At the same time, during processing of the battery, the liquid level sensors 221 are uniformly arranged on the inner wall. The adjacent ones of the liquid level sensors 221 are connected to form a mesh structure by optical fibers, so that an monitoring area of the liquid level sensors 221 can be improved, and monitoring accuracy result of the device can be further improved.

With this arrangement, the liquid level sensors 221 can be installed according to position of the inner wall of the housing 40, so that monitoring accuracy of the device can be improved.

Specifically, 50 mm ≤ L1 ≤ 60 mm. In the embodiment of the present application, L1 is set corresponding to the length of the electrode and extends in the vertical direction of the electrode. In a case that L1 is less than 50mm or greater than 60mm, distances between two adjacent ones of the liquid level sensors 221 disposed on both sides of the first direction is too small or too large, so that the liquid level sensors 221 cannot accurately monitor the electrolyte in an area below the electrode, thereby reducing monitoring accuracy of the device. Therefore, L1 is set to range from 50 mm to 60 mm, which can not only meet monitoring requirements of the device, but also reasonably utilize area of the inner wall of the housing 40, thereby ensuring monitoring effect of the device. In the present application, L1 is specifically set to be 55 mm.

Optionally, L1 may also be set to other values such as 50mm or 60mm. The specific setting should be selected according to a structure of a motor, so that applicability and application range of the device can be improved.

In this embodiment, 15 mm ≤ L2 ≤ 20 mm. In a case that L2 is less than 15 mm, a distance between two adjacent ones of the liquid level sensors 221 is too small, so that signal interference between the liquid level sensors 221 may be caused, thereby reducing stability of the device when monitoring the electrolyte. In a case that L2 is greater than 20 mm, a distance between two adjacent ones of the liquid level sensors 221 is too large, so that a monitoring area of the liquid level sensors 221 is reduced, thereby reducing accuracy of the device when monitoring the electrolyte. Therefore, L2 is set to range from 15 mm to 20 mm, which not only meets requirement of monitoring of the device, but also ensures stability of the device when monitoring the electrolyte.

In the present application, L2 is set to 18 mm. Optionally, L2 can also be set to other values such as 15mm or 20mm. The specific setting should be selected according to the structure of the motor, so as to improve applicability and application range of the device.

Specifically, a distance between two adjacent ones of the liquid level sensors 221 provided at intervals along the second direction of the housing 40 is L3, and 15 mm ≤ L3 ≤ 20 mm. In a case that L3 is less than 15 mm, a distance between two adjacent ones of the liquid level sensors 221 is too small, so that signal interference between the liquid level sensors 221 may be caused, thereby reducing stability of the device when monitoring the electrolyte. In a case L3 is greater than 20 mm, a distance between two adjacent ones of the liquid level sensors 221 is too large, so that a monitoring area of the liquid level sensors 221 is reduced, thereby reducing accuracy of the device when monitoring the electrolyte. Therefore, L3 is set to range from 15 mm to 20 mm, which can not only meet monitoring requirements of the device, but also ensure stability of monitoring of the device.

In the present application, L3 is set to 18 mm. Optionally, L3 can also be set to other values such as 15mm or 20mm. The specific setting should be selected according to the structure of the motor, so as to improve applicability and application range of the device.

In this embodiment, a distance between two adjacent ones of the liquid level sensors 221 provided at intervals along the third direction of the housing 40 is L4, and 15 mm ≤ L4 ≤ 20 mm. In a case that L4 is less than 15 mm, a distance between two adjacent ones of the liquid level sensors 221 is too small, so that signal interference between the liquid level sensors 221 may be caused, thereby reducing stability of the device when monitoring the electrolyte. In a case that L4 is greater than 20 mm, a distance between two adjacent ones of the liquid level sensors 221 is too large, so that a monitoring area of the liquid level sensors 221 is reduced, thereby reducing accuracy of the device when monitoring the electrolyte. Therefore, L4 is set to range from 15 mm to 20 mm, which can not only meet monitoring requirements of the device, but also ensure stability of monitoring of the device.

In the present application, L4 is set to 18 mm. Optionally, L4 can also be set to other values such as 15mm or 20mm. The specific setting should be selected according to the structure of the motor, so as to improve applicability and application range of the device.

In one embodiment, L3 is equal to L4. This arrangement not only facilitates installation of the liquid level sensor 221 and improves assembly efficiency of the apparatus, but also allows the liquid level sensor 221 to be uniformly distributed on the inner wall of the housing 40. Therefore, utilization rate of the liquid level sensor 221 on the inner wall of the housing 40 can be further improved.

In this embodiment, a material of the housing 40 includes aluminum alloy. Since aluminum alloy has light weight and good thermal conductivity, overall weight of the device can be reduced, so as to realize development of lightweight of the device. At the same time, efficiency of the heat dissipation of the device during operation can be improved, thereby being beneficial to ensuring stability of the device during operation.

Embodiments of the present application provide the battery pack. The battery pack includes one or more batteries capable of monitoring an electrolyte and an analysis component. The analysis component has a receiving terminal. The receiving terminal is wirelessly and wiredly connected to the battery. The analysis component is configured to receive and analyze signals from monitoring components of the battery. Wireless transmission may utilize electromagnetic, low-frequency sound waves, Bluetooth, and etc. Wired transmission transmits signals through optical fibers. In the present application, the liquid level sensors 221 preferentially uses wireless transmission. As such, transmission efficiency is ensured, and cost of use of the device is reduced. In a case that the wireless transmission fails, the signals are transmitted through the optical fibers.

Specifically, the battery pack further includes an early warning component. The early warning component is electrically connected to the analysis component. The early warning component is capable of receiving an analysis signal of the analysis component and controlling the battery. By providing above structures, the early warning component can issue corresponding instructions to the battery to control operating states of the battery, so that the battery can be in a relatively safe and stable state during operation, thereby being beneficial to prolonging service life of the device.

According to the technical solutions of the present application, the plurality of liquid level sensors 221 are arranged in an array on the inner side wall of the housing 10. The distribution of the electrolyte inside the battery can be detected in real time by the liquid level sensors 221. Therefore, it is convenient for the user to easily understand states of the electrolyte inside the battery, so that the battery housing 10 does not need to be destroyed. As such, cost of monitoring of the device is not only reduced, monitoring accuracy of the electrolyte is also improved.

## Claims

1. . A battery capable of monitoring an electrolyte, comprising:
a housing provided with an accommodating cavity, wherein the accommodating cavity comprises an opening at one end;
a cover plate covering the opening; and
an acquisition module comprising a processing chip and an acquisition sensor electrically connected to the processing chip, wherein the acquisition sensor is configured to acquire state data of the electrolyte in the battery capable of monitoring the electrolyte;
wherein the processing chip is disposed in the cover plate; the acquisition sensor is disposed in the accommodating cavity, a first end of the acquisition sensor is disposed in the electrolyte in the accommodating cavity; and a distance between the first end of the acquisition sensor and a bottom plate of the housing is less than or equal to a first threshold.

2. . The battery capable of monitoring the electrolyte according to claim 1, wherein the acquisition sensor comprises a liquid level sensor configured to acquire liquid level data of the electrolyte, and the liquid level sensor is electrically connected to the processing chip by a first transmission line; and
wherein the liquid level sensor comprises a main body portion, a hollow groove is provided in the main body portion, the hollow groove is configured to accommodate the electrolyte; and a height of a liquid level of the electrolyte in the hollow groove is equal to a height of a liquid level of the electrolyte in the accommodating cavity.

3. . The battery capable of monitoring the electrolyte according to claim 2, wherein the hollow groove extends along a thickness direction of the battery capable of monitoring the electrolyte, and the liquid level sensor is further provided with a connecting channel on a side adjacent to the bottom plate, and the hollow groove communicates with the electrolyte by the connecting channel.

4. . The battery capable of monitoring the electrolyte according to any one of claims 1-3, wherein the liquid level sensor further comprises a bottom sensing part and a side sensing part; the side sensing part is provided with a plurality of sensing scales, and the bottom sensing part and the electrolyte in the hollow groove form a current loop; and
wherein the height of the liquid level of the electrolyte in the hollow groove is negatively correlated with a current of the current loop.

5. . The battery capable of monitoring the electrolyte according to any one of claims 1-3, wherein the acquisition sensor comprises a pH sensor configured to acquire pH data of the electrolyte, and the pH sensor is electrically connected to the processing chip by a second transmission line.

6. . The battery capable of monitoring the electrolyte according to claim 5, wherein the pH sensor is disposed at the bottom of the housing, and
wherein the pH sensor comprises a supporting part and a sensing part; the supporting part is disposed outside a bare cell in the battery capable of monitoring the electrolyte, and is configured to support the bare cell in the battery capable of monitoring the electrolyte; and the sensing part is disposed inside the bare cell.

7. . The battery capable of monitoring the electrolyte according to claim 6, wherein the sensing part comprises a sensing electrode, a reference electrode, and a galvanometer; and
wherein the reference electrode is configured to be input with a first potential that is constant, the sensing electrode is configured to sense a second potential of hydrogen ions in the electrolyte, and the galvanometer is configured to acquire a potential difference value between the first potential and the second potential.

8. . The battery capable of monitoring the electrolyte according to claim 7, wherein the acquisition module further comprises a third transmission line and a fourth transmission line disposed on the processing chip, and wherein the first transmission line, the second transmission line, the third transmission line, and the fourth transmission line are disposed in parallel; and
wherein the third transmission line is configured to transmit liquid level data from the first transmission line, and the fourth transmission line is configured to transmit pH data from the second transmission line.

9. . The battery capable of monitoring the electrolyte according to any one of claims 1-3 or 6-8, wherein the cover plate comprises
an upper plastic; and
a lower plastic disposed between the upper plastic and the housing, and an exhausting groove is provided in the lower plastic; and
wherein two first baffles are arranged in the exhausting groove, and the two first baffles divide the exhausting groove into an air releasing groove and placement grooves disposed on both sides of the air releasing groove; a plurality of exhausting holes are provided at the bottom of the air releasing groove, and at least one of the placement grooves is provided with the processing chip.

10. . The battery capable of monitoring the electrolyte according to claim 9, wherein at least two second baffles are further provided in the placement groove, and the second baffles are disposed on the side wall of the placement grooves; and
wherein the processing chip is disposed on bottom surfaces of the placement grooves, the second baffles are disposed apart from the processing chip, and the second baffles have an overlapping portions with the processing chip.

11. . The battery capable of monitoring the electrolyte according to claim 10, wherein the placement grooves are further filled with a protective adhesive, the protective adhesive covers the processing chip, and the second baffles abut against the protective adhesive; or,
the protective adhesive covers the processing chip and the second baffles.

12. . The battery capable of monitoring the electrolyte according to claim 1, wherein the acquisition sensor comprises a plurality of the liquid level sensors, and the plurality of the liquid level sensors are disposed on an inner side wall of the housing in an array; two adjacent ones of the liquid level sensors are connected by optical fiber communication, and the liquid level sensors are configured to monitor liquid level data of the electrolyte; and
wherein distances between adjacent ones of the liquid level sensors disposed at intervals along a length direction of the battery capable of monitoring the electrolyte comprises L1 and L2, and L1 > L2.

13. . The battery capable of monitoring the electrolyte according to claim 12, wherein L1 is greater than or equal to 50 mm and less than or equal to 60 mm.

14. . The battery capable of monitoring the electrolyte according to claim 12, wherein L2 is greater than or equal to 15 mm and less than or equal to 20 mm.

15. . The battery capable of monitoring the electrolyte according to any one of claims 12 to 14, wherein a distance between two adjacent ones of the liquid level sensors disposed along a thickness direction of the battery capable of monitoring the electrolyte is L3, and 15 mm ≤ L3 ≤ 20 mm.

16. . The battery capable of monitoring the electrolyte according to claim 15, wherein a distance between two adjacent ones of the liquid level sensors disposed along a width direction of the battery capable of monitoring the electrolyte is L4, and 15 mm ≤ L4 ≤ 20 mm.

17. . The battery capable of monitoring the electrolyte according to claim 16, wherein each two of an extension line along the length direction of the battery capable of monitoring the electrolyte, an extension line along the thickness direction of the battery capable of monitoring the electrolyte, and an extension line along the width direction of the battery capable of monitoring the electrolyte intersect.

18. . The battery capable of monitoring the electrolyte according to claim 17, wherein an angle between two of the extension line along the length direction of the battery capable of monitoring the electrolyte, the extension line along the thickness direction of the battery capable of monitoring the electrolyte and the extension line along the width direction of the battery capable of monitoring the electrolyte is a right angle.

19. . The battery capable of monitoring the electrolyte according to claim 16, wherein L3 is equal to L4.

20. . A battery pack, comprising:
one or more batteries capable of monitoring the electrolyte as claimed in any one of claims 1-19; and
an analysis component having a receiving terminal wirelessly and/or wiredly connected to the battery, wherein the analysis component is configured to receive and analyze signals from monitoring components of the battery.

21. . The battery pack of claim 20, wherein the battery pack further comprises an early warning component electrically connected to the analysis component, and the early warning component is capable of receiving an analysis signal of the analysis component and controlling the battery.
